# EUROPEAN PATENT SPECIFICATION

(11) **EP 1 959 653 B1**
(45) Date of publication and mention of the grant of the patent: **19.01.2011**
(21) Application number: 08002280.9
(22) Date of filing: 07.02.2008
(51) Int. Cl.: H04M 1/725

(54) **Method and device for managing look and feel of terminal device**
Verfahren und Vorrichtung zur Verwaltung von Aussehen und Haptik eines Endgeräts
Procédé et dispositif de gestion d'apparence et de sensation d'un dispositif terminal

(30) Priority: 14.02.2007 CN 200710080184; 12.10.2007 WO PCT/CN2007/070886
(43) Date of publication of application: 20.08.2008
(73) Proprietor: Huawei Technologies Co., Ltd., Longgang District, Shenzhen Guangdong 518129 (CN)
(72) Inventor: Zhao, Hui, Shenzhen Guangdong 518129 (CN); Li, Kepeng, Shenzhen Guangdong 518129 (CN); Zhao, Qin, Shenzhen Guangdong 518129 (CN); Chai, Xiaoqian, Shenzhen Guangdong 518129 (CN); Liu, Guiqiang, Shenzhen Guangdong 518129 (CN)
(74) Representative: Reinhard - Skuhra - Weise & Partner GbR

(56) References cited:
- OPEN MOBILE ALLIANCE: "Look and Feel Customization Requirements (Candidate Version 1.0)" INTERNET CITATION, [Online] 11 December 2007 (2007-12-11), XP002481027 Retrieved from the Internet: URL:http://www.openmobilealliance.org/Tech nical/release_program/docs/RD/OMA-RD-LFC-V 1_0-20071211-C.pdf> [retrieved on 2008-05-20]
- OPEN MOBILE ALLIANCE: "Look and Feel Customization Requirements (Draft Version 1.0)" INTERNET CITATION, [Online] 11 February 2007 (2007-02-11), XP002481023 Retrieved from the Internet: URL:http://member.openmobilealliance.org/f tp/Public_documents/REQ/REQ-LFC/2007/OMA-R EQ-LFC-2007-0008R03-CR_LFC_RD_CR.zip> [retrieved on 2008-05-20]
- NOKIA: "OMA Device Management DDF for Nokia Remote Customization" INTERNET CITATION, [Online] 1 February 2006 (2006-02-01), XP002481028 Retrieved from the Internet: URL:http://www.forum.nokia.com/info/sw.nok ia.com/id/9e3cac11-8292-4720-be2e-3ff85545 faaa/OMA_Device_Management_DDF_For_Nokia_R emote_Customization_v1_0.zip.html> [retrieved on 2008-05-20]

## Description

### Field of the Technology

The present invention relates to Look and Feel Customization technologies, and particularly, to a method for managing the Look and Feel of a terminal device according to the preamble of Claim 1 and to a device for managing the Look and Feel of a terminal device according to the preamble of Claim 11, which both are known from the publication of the OPEN MOBILE ALLIANCE titled "Look and Feel Customization Requirements (Draft Version 1.0" published online on http://member.openmobilealliance.org on 11 February 2007.

The Device Management (DM) specification in the Open Mobile Alliance (OMA) is a unified standard device management specification newly developed. The DM specification provides a mechanism for a DM server to manage a terminal device. Look and Feel Customization (LFC) technologies may use the mechanism provided by the DM specification to customize look and feel of a terminal device. A user may customize different look and feel for the terminal device on telephone or network. For example, the user may customize the poster of a new film as the background of the terminal device.

An LFC client for explaining a command from a server and performing corresponding processing is set in the terminal device in order to implement the function of customizing the look and feel of a terminal device. A standard interface for communication between an LFC server and the LFC client set in the terminal device is also provided in the LFC technologies. The standard interface includes an operation of Look and Feel Customization and a management object of Look and Feel Customization. The operation of Look and Feel Customization includes Add, Get, Replace and execute (Exec). The management object of Look and Feel Customization includes two parts. One is LFC elements, i.e. types of look and feel information that can be managed in the terminal device. The types of look and feel information include the subject, desktop, screen saver and ring tone of the terminal device. The other is available LFC Element Settings. For example, the subject of the terminal device may be the subject of Windows Mobile or the subject of Lenovo. In addition, the management object of Look and Feel Customization also includes other information such as an activation operation of activating an available LFC Element Setting.

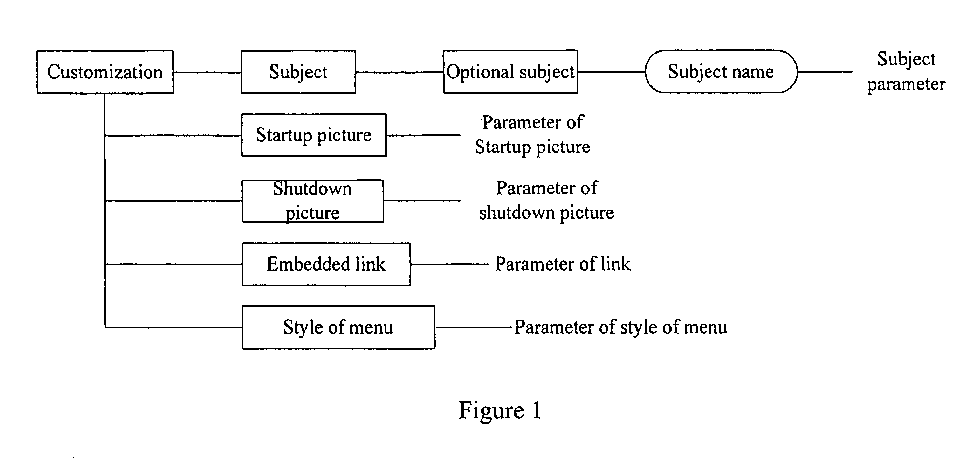

At present, an LFC server may implement the basic function of customizing the look and feel of a terminal device with the LFC technologies. Figure 1 shows a schematic diagram illustrating a conventional standard interface for managing the look and feel of a terminal device. As shown in Figure 1, with a conventional method for managing the look and feel of a terminal device, a user may customize different subjects, set a startup picture and a shutdown picture, and change an embedded link and an operation menu style for the terminal device. The LFC server sends an operation command containing an LFC Element and an available LFC Element Setting to the LFC client through the standard interface. The LFC client explains the operation command and performs the corresponding processing, and sends a processing result to the LFC server through the standard interface.

In OPEN MOBILE ALLIANCE: "Look and Feel Customization Requirements (Draft Version 1.0)" INTERNET CITATION, [Online] 11 February 2007 (2007-02-11), XP002481023, it defines the requirements for the Look and Fell Customization enabler, which allows the configuration and management of a device look and feel. However, it mainly relates to the requirements but does not provide specific implementation schemes.

The inventor of the present invention finds the following disadvantages in the conventional LFC technologies.

First, in the case that the LFC server sets an LFC Element Setting for the terminal device, the terminal device activates the LFC Element Setting and indicates the update of a current LFC Element Setting at the same time. If only one of the two operations of activation and indication succeeds, the LFC Element Setting actually used by the terminal device is not in accord with the current LFC Element Setting of which the update is indicated by the terminal device.

In addition, the LFC server can not deactivate an LFC Element Setting of the terminal device. The deactivation is to make the LFC Element Setting previously used by the terminal device not be used by the terminal device any more. After the LFC Element Setting customized by a user for the terminal device expires, the LFC server can not stop the terminal device using the expired LFC Element Setting, affecting the normal development of the user customization service.

Second, if LFC Elements are related to each other, after one of the LFC Elements is activated by the LFC server, the other LFC Elements cannot be changed correspondingly but only be activated by the LFC server. For example, the subject, desktop and screen saver of the terminal device are LFC Elements related to each other, the LFC server needs to send an operation command again to change the current desktop of the terminal device from the desktop of Windows Mobile to the desktop of Lenovo and change the current screen saver of the terminal device from the screen saver of Windows Mobile to the screen saver of Lenovo after the LFC server changes the subject of the terminal device from the subject of Windows Mobile to the subject of Lenovo by using an operation command. In other words, the LFC server must obtain related relations between the LFC Elements. Upon changing one of the LFC Elements, the LFC server changes other LFC Elements related to the LFC Element correspondingly, or else, the LFC Elements related to each other in the terminal device may not match each other, thus bringing inconvenience to the terminal device. However, the processing complexity of the LFC server is thus increased and the amount of the information transferred in the air is increased.

Third, the LFC server cannot lock an LFC Element Setting of the terminal device, and thus cannot lock a particular LFC Element Setting of the terminal device. As a result, it can not be avoided that a user changes the particular LFC Element Setting, which affects the further development of the user customization service.

Fourth, the LFC server cannot query a default value of an LFC Element of the terminal device. For example, the LFC server cannot query the default background of the terminal device. If the background customized by a user is a background with a free term of one month, the LFC server deactivates the background in the terminal device to make the user unable to use the background any longer after the background has been used for one month. However, because the LFC server cannot query the default background of the terminal device, the LFC server cannot set a new background for the terminal device upon deactivating the free background customized by the user. Thereby, the background picture of the user may become disordered, which affects the normal use of the terminal device by the user and thus brings bad service experience to the user. In addition, the LFC server cannot set the default value for an LFC Element, such as the default address of the browser of the terminal device, which limits the development of the customization service.

Fifth, the LFC server cannot configure parameters for an LFC Element Setting. For example, the LFC server cannot change the configuration of the background picture of the terminal device. Specifically, if the background customized by a user for the terminal device is suitable to be displayed in the center and the configuration of the background in the mobile phone of the user is tile display, the background displayed in the mobile phone may look bad because the LFC server cannot change the configuration of the terminal device of the user. As a result, the user is dissatisfied with the customization service and the development of the customization service is thus affected.

As can be seen, only part of functions of managing the look and feel of the terminal device are implemented in the conventional LFC technologies, which affects the customization experience of users and thus limits the development of the customization service.

### Summary of the Invention

The present invention provides a method for managing look and feel of a terminal device to manage the look and feel of the terminal device overall, which is defined in independent claim 1.

An embodiment of the present invention provides a device for managing look and feel of a terminal device to manage the look and feel of the terminal device overall, which is defined in independent claim 11.

As can be seen, with the solutions in accordance with embodiments of the present invention, the configuration command is received from the server and the configuration command contains the designated LFC Element Setting, and/or the designated default LFC Element Setting, and/or the designated parameter of the LFC Element Setting. Therefore, the look and feel of the terminal device can be managed according to an indication of the configuration command. For example, an LFC Element Setting is activated, deactivated or locked according to the designated LFC Element Setting in the configuration command, or a related LFC Element Setting is set according to the designated LFC Element Setting in the configuration command. For example, the default LFC Element Setting is configured according to the designated default LFC Element Setting in the configuration command. For another example, a parameter of the current LFC Element is changed according to the designated parameter in the configuration command. Thereby, the overall management of the look and feel of the terminal device is achieved.

### Brief Description of the Drawings

Embodiments of the present invention are hereinafter described in combination with reference to the accompanying drawings so as to make the characteristics and merits of the present invention more apparent to those skilled in the art.
Figure 1 is a schematic diagram illustrating a conventional standard interface for managing look and feel of a terminal device;
Figure 2 is a schematic diagram illustrating a standard interface for managing the look and feel of the terminal device in accordance with an embodiment of the present invention;
Figure 3 is a schematic diagram illustrating a standard interface for managing the look and feel of the terminal device in accordance with an embodiment of the present invention;
Figure 4 shows a flow chart of a method for activating an LFC Element Setting in accordance with an embodiment of the present invention;
Figure 5 shows a flow chart of a method for locking an LFC Element Setting in accordance with an embodiment of the present invention;
Figure 6 shows a flow chart of a method for querying and configuring a default LFC Element Setting in accordance with an embodiment of the present invention;
Figure 7 shows a flow chart of a method for changing parameters of an LFC Element Setting in accordance with an embodiment of the present invention; and
Figure 8 is a schematic diagram illustrating a device for managing the look and feel of the terminal device in accordance with an embodiment of the present invention.

### Embodiments of the Invention

Embodiments of the present invention are described as follows in detail in conjunction with the accompanying drawings so as to make technical solutions and merits of the invention more apparent.

In this invention, LFC Element is one characteristic of a device's LFC (e.g. screen saver, incoming data message alert, ring tone per caller, etc). LFC Element Setting is the combination of an LFC Element and an associated value for it.

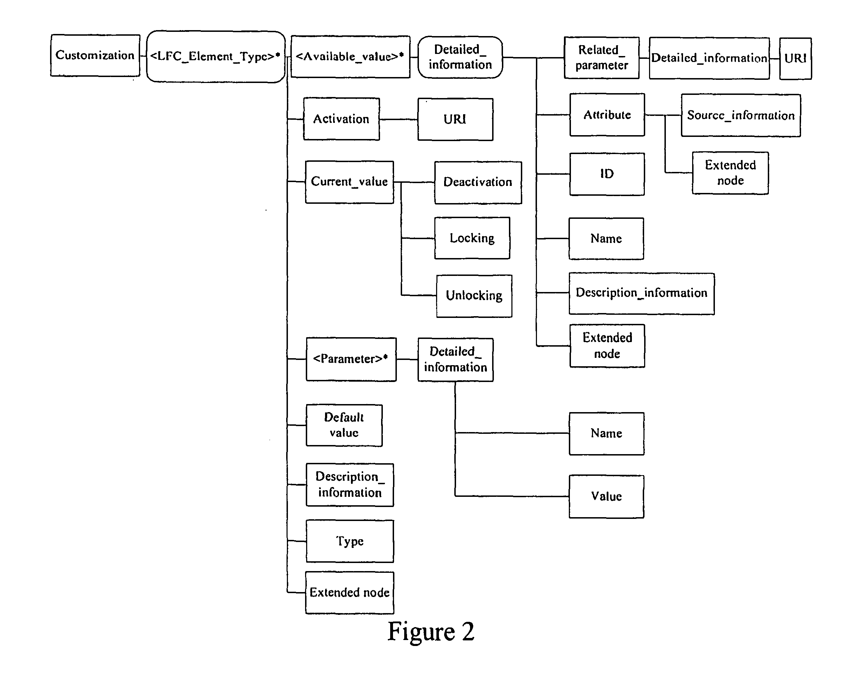

Figure 2 is a schematic diagram illustrating a standard interface for managing the look and feel of the terminal device in accordance with an embodiment of the present invention. As shown in Figure 2, the standard interface for managing the look and feel of the terminal device in accordance with an embodiment of the present invention uses an LFC Element type node to distinguish different types of LFC Elements such as the subject and the screen saver.

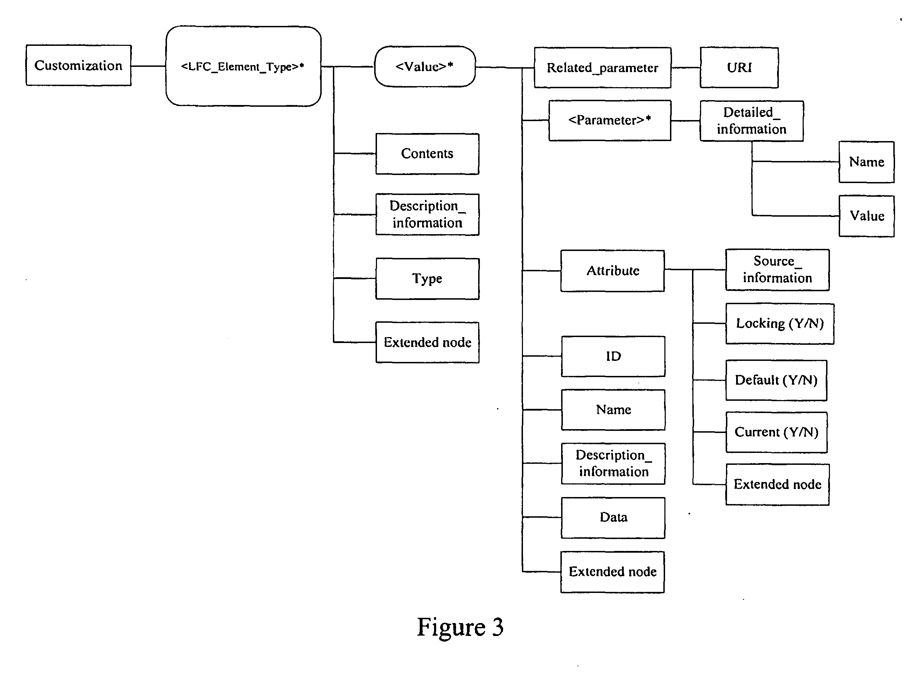

In Figure 2 and Figure 3, the symbol '*' means there may be zero or more instances for the nodes. A device may have multiple LFC element types, and for each LFC element type, the device may have multiple values. For example, the device can have screen saver, background picture, subject etc., and for the background picture, it can be Windows Mobile or Lenovo. Also, for each LFC Element Setting, there may be multiple parameters, such as the layout and the color.

In this embodiment, an Activation node under LFC_Element_Type node is used to activate an LFC Element Setting. The Activation node is configured to perform the activation operation and apply the Uniform Resource Identifier (URI) under the Activation node as the current value. When a current LFC Element Setting is changed by the Activation node, the LFC server changes the URI under the Activation node first and then issues an Exec command. The Activation node changes the current LFC Element Setting to the value indicated by the URI upon receiving the Exec command.

In this embodiment, a Current_value node under LFC_Element_Type node indicates a current LFC Element Setting of the terminal device. For example, a value of the Current_value node is the URI of the three-dimensional characters if the current screen saver is three-dimensional character. The value of the Current_value node is changed automatically after the Activation node succeeds in changing the LFC Element Setting. The value of the Current_value node remains unchanged if the Activation node fails in changing the LFC Element Setting. Thus, the value indicated by the Current_value node keeps in accordance with the actual current value of the terminal device.

In this embodiment, the Deactivation node under the Current_value node deactivates an LFC Element Setting. The Deactivation node is configured for performing the deactivation operation, i.e. stopping using the value indicated by the Current_value node. The default value should be set as the current value if no other values are activated after the value indicated by the Current_value node is deactivated.

In this embodiment, a Related parameter node under the LFC_Element_Type/Available_value node is used to change the related LFC Elements. A parameter and the parameter value related to the available LFC Element Setting are set under the Related_parameter node. For example, the subject, background and screen saver of the terminal device are LFC Elements related to each other. If the type of an LFC Element is the subject and the available value of the subject is Lenovo, the Related_parameter under the Available_value node is the background and the screen saver, and the Detailed_information under the Related_parameter indicates the value of the background and the value of the screen saver as Lenovo. If the current subject needs to be changed to Lenovo, the terminal device applies the parameter of the Lenovo subject to be the parameter of the current subject, and the Lenovo background and the Lenovo screen saver in the related_parameter are changed at the same time. The LFC server need not send configuration commands of the background and the screen saver respectively to the terminal device again.

In this embodiment, a Locking node and an Unlocking node under the Current_value node is used to lock and unlock an LFC Element Setting respectively. The Locking node is configured to perform the locking operation, i.e. lock the value of the Current_value node to make a user unable to change the value of the current LFC Element Setting, in other words, content of the current LFC Element Setting may not be changed or updated. The Unlocking node is configured to perform the unlocking operation, i.e. unlock the value of the Current_value node so that a user can change the content of the current LFC Element Setting.

In this embodiment, a Default_value node under LFC_Element_Type node is used to change the default value of an LFC Element. The Default_value node is configured to indicate the default value of an LFC Element. For example, the default value of the screen saver is the three-dimensional pipeline and the value of the Default_value node is the URI of the three-dimensional pipeline. The default value of an LFC Element is changed by changing the value of the Default_value node.

In this embodiment, a Parameter node under the LFC_Element_Type node is used to change the parameter of an LFC Element. The parameter node is configured to indicate different parameters of an LFC Element. A Name node and a Value node are set under the Parameter node. The parameter of an LFC Element is changed by changing the value of the Name node and the value of the Value node.

In addition, an Attribute node is added under the Available_value node in this embodiment. The Attribute node includes a Source_information node configured to indicate whether the LFC Element is configured by the LFC server or by the user so as to further distinguish different attributes of an available LFC Element Setting.

The other nodes in the standard interface in accordance with the embodiment of the present invention are common technologies to those skilled in the art and are not described herein.

As can be seen from the above description of the embodiment of the standard interface, the LFC server can exactly obtain the current LFC Element Setting of the terminal device using the Activation node and the Current_value node. When changing an LFC Element, the LFC server can change another LFC Element related to the LFC Element using the Related_parameter node. The LFC server can lock and unlock an LFC Element Setting of the terminal device using the Locking node and the Unlocking node respectively. The LFC server can query and set the default value of an LFC Element using the Default_value node. The LFC server may set a parameter of an LFC Element using the Parameter node. In accordance with the embodiment of the present invention, a designated value refers to a current LFC Element Setting and a default value refers to a default LFC Element Setting.

Figure 3 is a schematic diagram illustrating a standard interface for managing the look and feel of the terminal device in accordance with an embodiment of the present invention. As shown in Figure 3, the standard interface for managing the look and feel of the terminal device in accordance with this embodiment of the present invention uses an LFC_Element_Type node to distinguish different types of LFC Elements, such as the subject and the screen saver.

In this embodiment, a Current node under an Attribute node is used to activate or deactivate an LFC Element Setting and indicate a current LFC Element Setting of the terminal device. The LFC server changes the current LFC Element Setting of the terminal device through changing the state of the Current node. For example, supposing that the LFC Element is the background of which the value is Lenovo, and the state of the Current node under the Value/Attribute node is set as a current state, the current background of the terminal device is changed to the background of Lenovo, and the Current node can also indicate that the current background of the terminal device is the background of Lenovo. When the background of Lenovo would be deactivated, the state of the Current node under the Value/Attribute node is set as a non current state.

Configuring the state of a node is common technology in the art and will not be described herein.

In this embodiment, the Related_parameter node under the Value node of the LFC_Element_Type node is used to change a related LFC Element, and the Parameter node under the LFC_Element_Type node changes a parameter of an LFC Element. The function of the Related_parameter node and the Parameter node in this embodiment are exactly the same as those of the Related_parameter node and the Parameter node in the embodiment shown in Figure 2 and will not be described herein.

In this embodiment, the Locking node under the Attribute node is used to lock and unlock an LFC Element Setting respectively. The Locking node is configured to indicate whether the LFC Element Setting indicated in the Value node is locked or not. If the LFC server changes the state of the Locking node to be locked, the LFC Element Setting corresponding to the Attribute node is locked, and the user cannot change the LFC Element Setting. If the LFC server changes the state of the Locking node to be unlocked, the LFC Element Setting corresponding to the Attribute node is unlocked and the user can change the LFC Element Setting. Changing means modification to the content of the LFC Element Setting or swapping the current LFC Element Setting to another one.

In this embodiment, the Default node under the Attribute node is used to change a default LFC Element Setting. The Default node is configured to indicate whether the LFC Element Setting indicated in the Value node is used as the default value for the LFC Element type. If yes, the state of the Default node is the default state, otherwise, the state of the default node is the non default state. Therefore, the LFC server is enabled to query the default value of the LFC Element. If the LFC server needs to set the default value of the LFC Element of the terminal device, the state of the corresponding Default node is changed. Supposing that the type of the LFC Element is screen saver and the value of the Value node is three-dimensional pipeline, the state of the Default node under the Value node is changed from the non default state to the default state if the LFC server needs to set the three-dimensional pipeline as the default screen saver of the terminal device.

In addition, in this embodiment, a Source node is configured to indicate whether the LFC Element Setting is configured by the LFC server or the user so as to further distinguish different attributes of available LFC Element Settings.

As can be seen in the above description of this embodiment of the standard interface, the LFC server can obtain the current LFC Element Setting of the terminal device exactly, activate and deactivate the LFC Element Setting using the Current node. The LFC server can lock and unlock the LFC Element Setting of the terminal device using the Locking node. When changing a first LFC Element, the LFC server can change another LFC Element related to the first LFC Element using the Related_parameter node. The LFC server can query and set the default LFC Element Setting using the Default_value node. The LFC server may set a parameter of the LFC Element using the Parameter node.

The standard interfaces shown in Figure 2 and Figure 3 are only examples of a standard interface in accordance with embodiments of the present invention and are not for use in limiting the present invention. The standard interfaces which are capable of managing look and feel of the terminal device overall in accordance with an embodiment of the present invention are in the protection scope of the present invention.

The method for managing the look and feel of the terminal device in accordance with an embodiment of the present invention is hereinafter described in detail based on the standard interfaces shown in Figure 2 and Figure 3. For convenience, the LFC server is called a server for short in the following embodiments.

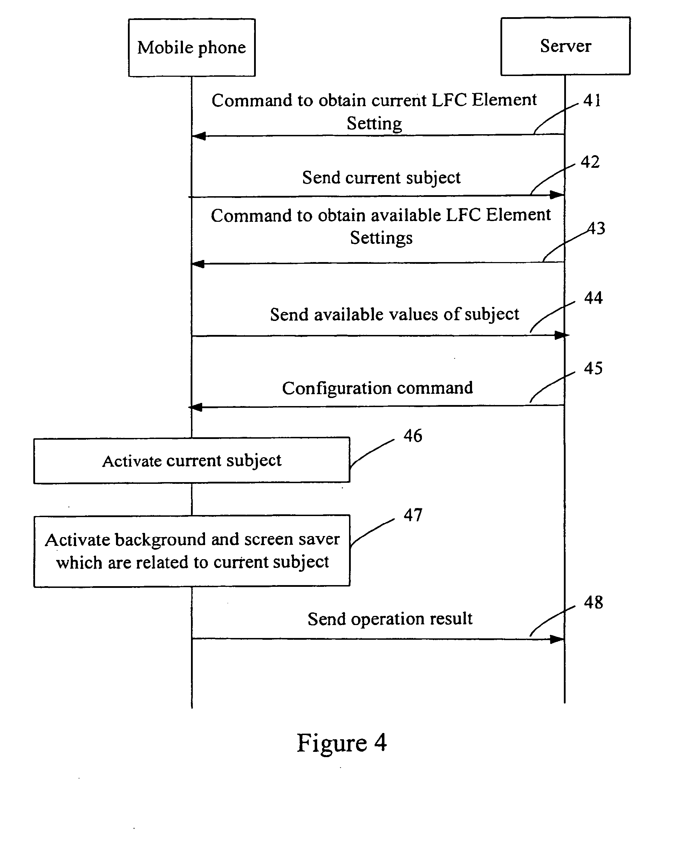

Figure 4 is a flow chart of a method for activating an LFC Element Setting in accordance with an embodiment of the present invention. In this embodiment, a server activates the subject of a terminal device and activates the LFC Elements related to the subject at the same time. In this embodiment, it is supposed that the terminal device is a mobile phone and the LFC Elements related to the subject are background and screen saver. As shown in Figure 4, the method for activating an LFC Element Setting of the terminal device in accordance with an embodiment of the present invention is described below.

41: The server sends to the mobile phone a command to obtain a current LFC Element Setting.

The command to obtain a current LFC Element Setting contains a designated type of LFC Element. In this embodiment, the designated type of LFC Element is the subject.

42: The mobile phone sends to the server the current subject.

Supposing that the current subject of the mobile phone is the subject of Windows Mobile in this embodiment, the Current_value node of the mobile phone sends the current subject to the server, i.e. the subject of Windows Mobile.

Specifically, in the standard interface shown in Figure 2, the type of LFC Element is the subject and the Current_value node under the LFC_Element_Type node provides the current subject of the mobile phone. In the standard interface shown in Figure 3, the type of LFC Element is the subject and the Current node under the Value node with the value of Windows Mobile provides the current subject of the mobile phone.

41 and 42 may be omitted if the server has already obtained the current subject of the mobile phone.

43: The server sends to the mobile phone a command to obtain the available LFC Element Settings (i.e. the available values of the LFC Element).

The designated type of LFC Element is contained in the command to obtain the available values of the LFC Element. In this embodiment, the designated type of LFC Element is the subject.

44: The mobile phone sends to the server the available values of the subject.

Supposing that the available values of the subject of the mobile phone are Windows Mobile and Lenovo, the mobile phone sends to the server the available values of the subject, Widows Mobile and Lenovo.

Specifically, in the standard interface shown in Figure 2, the type of the LFC Element is the subject and the Available_value node under the LFC_Element_Type node provides the available subject values of the mobile phone; in the standard interface shown in Figure 3, the type of the LFC Element is the subject and the Value node provides the available subject values of the mobile phone.

43 and 44 may be omitted if the server has stored the available values of the mobile phone or has already obtained the available values of the mobile phone.

43 and 44 may be omitted if the server deactivates the subject of the terminal device through a configuration command.

45: The server sends a configuration command to the mobile phone.

The server has obtained the current subject of the mobile phone after the above process, and the server may now select a subject other than the current subject from available subject values and set the selected subject as a new subject of the mobile phone.

Supposing that the subject designated for the mobile phone by the server is the subject of Lenovo in this embodiment, the designated value of LFC Element contained in the configuration command is the designated value of subject, i.e. Lenovo.

Specifically, in the standard interface shown in Figure 2, the server changes the URI under the Activation node to the URI of the subject of Lenovo in the configuration command and sends an Exec command at the same time.

In the standard interface shown in Figure 3, in the configuration command, the server changes the state to current value for the Current node under the Value node of which the value is Lenovo, and changes the state to non current for the Current node under the Value node of which the value is Windows Mobile.

46: The mobile phone activates a current subject.

The mobile phone activates the subject of Lenovo as the current subject upon receiving the configuration command from the server.

Specifically, in the standard interface shown in Figure 2, the Activation node sets the subject of Lenovo as the current subject after the mobile phone receives the configuration command from the server. The mobile phone changes the value of the Current_value node at the same time to change the current subject of the mobile phone from the subject of Windows Mobile to the subject of Lenovo if the subject of Lenovo is activated successfully.

In the standard interface shown in Figure 3, the mobile phone sets the state of the Current node of the subject of Lenovo as the state of enable, and sets the state of the current node of the subject of Window Mobile as the non current state at the same time, and therefore the subject of the mobile phone is changed.

Only 45 and 46 are performed if the server performs only the operation of activating the subject of Lenovo.

47: The mobile phone activates the background and the screen saver related to the current subject.

After the mobile phone activates the subject of Lenovo to be the current subject, because the LFC Elements related to the subject are the background and the screen saver, the mobile phone activates the background and the screen saver to be Lenovo respectively to make them match the configuration of the subject of the mobile phone.

In the standard interface shown in Figure 2 or the standard interface shown in Figure 3, the background and the screen saver of Lenovo are preset in the Related_parameter node under the subject of Lenovo. When activating the subject of Lenovo, the terminal device activates the background of Lenovo to be the background of the mobile phone and activates the screen saver of Lenovo to be the screen saver of the mobile phone.

The mobile phone deactivates the background and the screen saver related to the current subject in 47 if the server deactivates the subject of the terminal device through a configuration command. The detailed implementation is the same as that for activating the subject of the terminal device and will not be described herein.

48: The mobile phone sends an operation result to the server.

The mobile phone sends the operation result to the server upon activating the subject, and the background and the screen saver which are related to the subject.

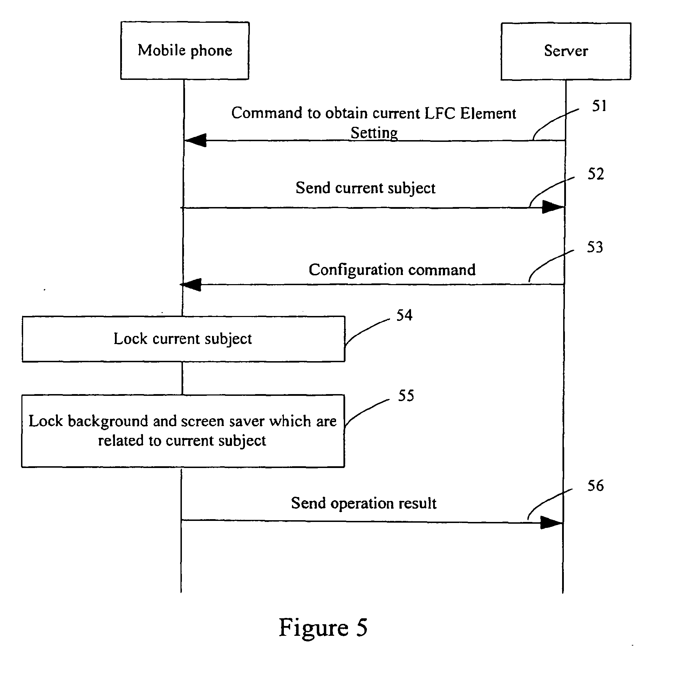

Figure 5 is a flow chart of a method for locking an LFC Element Setting in accordance with an embodiment of the present invention. In this embodiment, a server locks the current subject of a terminal device and locks LFC Elements related to the subject at the same time. Supposing that the terminal device is a mobile phone and the LFC Elements related to the subject are the background and the screen saver in this embodiment, as shown in Figure 5, the method for locking an LFC Element Setting of a terminal device in accordance with an embodiment of the present invention is described below.

51-52: The detailed implementation is the same as that in 41-42 in the embodiment shown in Figure 4 and is not described here.

53: The server sends a configuration command to the mobile phone.

The subject indicated by the server to be locked is the subject of Windows Mobile. The configuration command contains a designated value of the LFC Element, and the designated value contained is a designated value of the subject, i.e. Windows Mobile.

In the standard interface shown in Figure 2, the server changes the URI of the Locking node under the Current_value node to the URI of the subject of Windows Mobile in the configuration command. In the standard interface shown in Figure 3, the server changes the state of the Locking node under the Attribute node with the value of the subject of Windows Mobile to the state of locking.

54: The mobile phone locks the current subject.

The mobile phone locks the subject of Windows Mobile upon receiving the configuration command from the server.

In the standard interface shown in Figure 2, the mobile phone receives the configuration command from the server, and the Locking node is used to directly lock the subject of Windows Mobile. In the standard interface shown in Figure 3, the mobile phone sets the state of the Locking node under the Attribute node of the subject of Windows Mobile as the state of locked.

55: The mobile phone locks the background and the screen saver that are related to the current subject.

After the mobile phone locks the current subject, i.e. the subject of Windows Mobile, the mobile phone locks the current background and screen saver to make them match the configuration of the subject of the mobile phone because the LFC Elements related to the subject are the background and the screen saver.

In the standard interface shown in Figure 2 or the standard interface shown in Figure 3, the background of Windows Mobile and the screen saver of Windows Mobile are preset in a related parameter node under the subject of Windows Mobile. When locking the subject as the subject of Windows Mobile, the terminal device locks the LFC Elements related to the subject, i.e. locks the background as the background of Windows Mobile and locks the screen saver of the mobile phone as the screen saver of Windows Mobile.

56: The mobile phone sends an operation result to the server.

The mobile phone sends the operation result to the server upon locking the subject, and the background and the screen saver which are related to the subject.

In an embodiment of the present invention, the method for unlocking the designated value of an LFC Element is the same as the method for locking the designated value of an LFC Element and is not described herein.

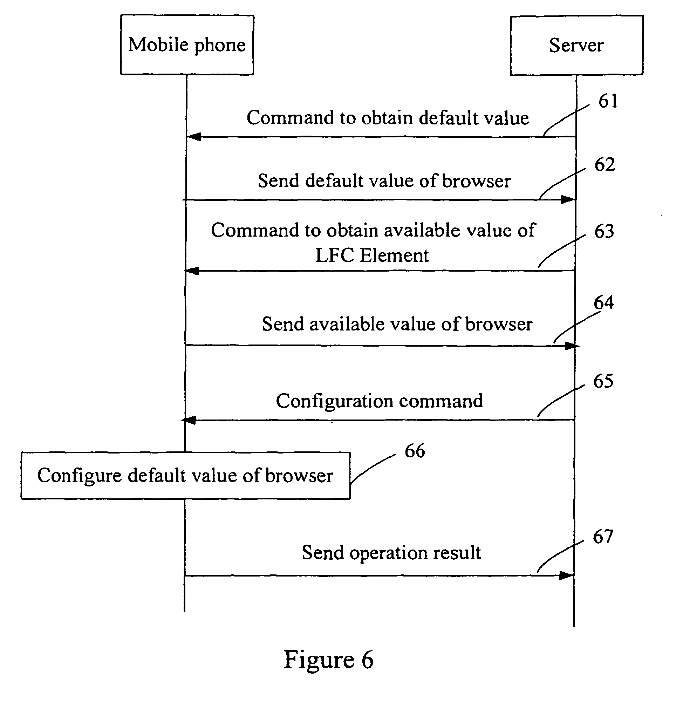

Figure 6 is a flow chart of a method for querying and configuring a default LFC Element Setting in accordance with an embodiment of the present invention. Supposing that the terminal device is a mobile phone and a server is to change the default value of the browser of the mobile phone in this embodiment, as shown in Figure 6, the method for configuring the default LFC Element Setting in accordance with an embodiment of the present invention is described below.

61: The server sends to the mobile phone a command to obtain a default value.

The command to obtain a default value contains a type of LFC Element designated by the server. The designated type of LFC Element contained in the command to obtain a default value in this embodiment is the browser.

62: The mobile phone sends to the server the default value of the browser.

In this embodiment, supposing that the default value of the browser of the mobile phone is about:blank page, the mobile phone sends to the server the default value of the browser, i.e. the default value of about:blank page.

In the standard interface shown in Figure 2, the type of LFC Element is the browser, and the Default_value node under the browser provides the default value of the browser of the mobile phone.

In the standard interface shown in Figure 3, the type of LFC Element is the browser, the state of the Default node under the Value node with the value of about:blank page is the default state, and the default node provides the current browser of the mobile phone, i.e. the browser of about:blank page.

61 and 62 may be omitted if the server has already obtained the current value of the browser of the mobile phone.

63: The server sends to the mobile phone a command to obtain the available values of an LFC Element.

In this embodiment, the command to obtain available values of an LFC Element contains a designated type of LFC Element, and the designated type is the browser.

64: The mobile phone sends available values of the browser to the server.

Supposing that the available values of the browser of the mobile phone are the homepage of China Mobile and about:blank page in this embodiment, the mobile phone sends to the server the available values of the browser, i.e. the homepage of China Mobile and about:blank page. The method for the mobile phone sending the available values of the browser in this embodiment is the same as that in 44 in the embodiment shown in Figure 4 and will not be described herein.

65: The server sends a configuration command to the mobile phone.

The server obtains the available values of the browser of the mobile phone through the above process, and the server may select a default value of the browser from the available values, and change the default value of the browser for the mobile phone.

In this embodiment, the server designates the home page of China Mobile to the mobile phone as the default value of the browser, and thus the designated default value of LFC Element contained in the configuration command is the homepage of China Mobile.

The server may also set a page customized by the user as an available value of the browser of the mobile phone and designate the page as the default value of the browser of the mobile phone.

66: The mobile phone changes the default value of the browser.

The mobile phone sets the default value of the browser as the homepage of China Mobile upon receiving the configuration command from the server.

In the standard interface shown in Figure 2, the mobile phone directly changes the default value of the browser of the mobile phone to the homepage of China Mobile upon receiving the configuration command from the server.

In the standard interface shown in Figure 3, upon receiving the configuration command from the server, the mobile phone sets the state of the Default node under the Value node with the value of the homepage of China Mobile as the default state, and sets the state of the Default node under the Value node with the value of about:blank page as the non default state.

63-66 may be omitted if the server only queries the default value of the browser of the mobile phone.

67: The mobile phone sends an operation result to the server.

The mobile phone sends the operation result to the server upon changing the default value of the browser.

The server may set the default value of the browser of the mobile phone through the above process.

The server can satisfy demands of a user through the above process if the user needs to change the default page of the browser of the terminal device. Therefore, the application scope of the service is extended.

In addition, the server may query the default value of the browser of the mobile phone through 61 and 62.

If the user customizes a background with a free term of one month and if the background expires, the server may query a default value of the background of the terminal device of the user, and sets the default value as the background of the terminal device of the user upon canceling the background customized by the user. Therefore, the disorder of the background of the terminal device is avoided, and the convenience is brought to the user.

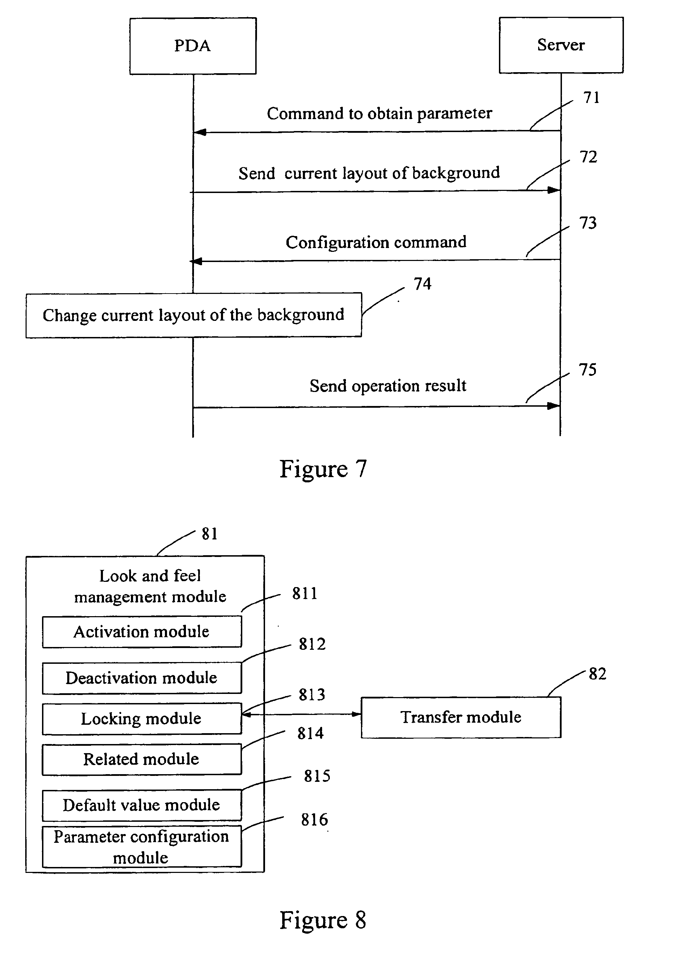

Figure 7 is a flow chart of a method for changing parameters of an LFC Element in accordance with an embodiment of the present invention. Supposing that the terminal device is a Personal Digital Assistant (PDA) and the server changes the layout of the background of the PDA in this embodiment, as shown in Figure 7, the method for configuring a parameter of an LFC Element in accordance with an embodiment of the present invention is described below.

71: The server sends to the PDA a command to obtain a parameter.

The command to obtain a parameter contains a designated parameter of an LFC Element. The designated parameter of an LFC Element is the layout of the background.

72: The PDA sends the current layout of the background.

Supposing that the layout of the background of the PDA is stretched, the PDA sends to the server the layout of the background.

In the standard interface shown in Figure 2, the type of LFC Element is the background, and the Parameter node under the background provides the current parameter of the mobile phone. In the standard interface shown in Figure 3, the type of LFC Element is the background, and the Parameter node under the Value node of the background provides the current parameter of the mobile phone.

71 and 72 may be omitted if the server has already stored the layout of the background of the PDA.

73: The server sends a configuration command to the PDA.

The server obtains the current layout of the background of the PDA through the above process, and changes the current layout of the background through the configuration command. In this embodiment, the parameter designated by the server for the layout of the background for the PDA indicates the layout of the background as centered. The server sends to the PDA the designated parameter contained in the configuration command.

74: The PDA changes the current layout of the background.

The mobile phone changes the layout of the background to the layout of centered upon receiving the configuration command from the server.

In the standard interface shown in Figure 2 or the standard interface shown in Figure 3, the mobile phone changes the value of the Name node under the Parameter node to the layout and changes the value of the Value node under the Parameter node to be centered.

In addition, the parameter of an LFC Element also includes source information for indicating whether the LFC Element is configured by the server or defined by the user. In this embodiment, the PDA sets the source information of the layout as being configured by the server when changing the current layout of the background to the layout of centered.

75: The PDA sends an operation result to the server.

The PDA sends the operation result to the server upon changing the layout of the background.

The server may actively change the layout of the background of the PDA through the above process.

If the background picture customized by the user has lower resolution and is adapted to the layout of centered, the server changes the layout of the background of the PDA as the layout of centered before changing the background of the PDA if the layout of the previous background is stretched. Therefore, the user may directly obtain a background picture with a better display effect, which improves the user's experience of customizing a background picture.

The above embodiments are only preferred embodiments of the method for managing the look and feel of the terminal device and are not for use in limiting the present invention. With the embodiments of the present invention, other LFC Elements of the terminal device can be changed, and the terminal device may be a terminal device that is applicable in the LFC technology besides the mobile phone or the PDA.

On the basis of the above method for managing the look and feel of the terminal device, a device for managing look and feel of a terminal device in accordance with an embodiment of the present invention is hereinafter described in detail.

Figure 8 is a schematic diagram illustrating a device for managing look and feel of a terminal device in accordance with an embodiment of the present invention. As shown in Figure 8, the device in accordance with this embodiment communicates with a server and manages its own LFC Elements. As shown in Figure 8, the device for managing an LFC Element of a terminal device in accordance with an embodiment of the present invention includes a look and feel management module 81 and a transfer module 82.

The transfer module 82 is configured to communicate with a server to receive a configuration command from the server. The configuration command contains a designated value of an LFC Element, and/or a designated default value of an LFC Element, and/or a designated parameter of an LFC Element.

The look and feel management module 81 is configured to manage the look and feel of the terminal device according to the configuration command, and send feedback information to the transfer module 82. The transfer module 82 forwards the feedback information to the server.

The look and feel management module 81 includes at least one of: an activation module 811, a deactivation module 812, a locking module 813, a related module 814, a default value module 815, a parameter configuration module 816.

The activation module 811 is configured to activate the designated value of an LFC Element contained in the configuration command.

The deactivation module 812 is configured to deactivate the designated value of an LFC Element contained in the configuration command.

The locking module 813 is configured to lock or unlock the designated value of an LFC Element contained in the configuration command.

The related module 814 is configured to store a related relation between LFC Elements, and change a value of an LFC Element related to the designated value of an LFC Element contained in the configuration command.

The default value module 815 is configured to change a default value of an LFC Element to the designated default value contained in the configuration command.

The parameter configuration module 816 is configured to store configuration of a parameter of an LFC Element and change the parameter of the LFC Element to the designated parameter contained in the configuration command.

As can be seen in the above embodiments, the technical solutions in accordance with the embodiments of the present invention have the following advantages.

First, the indication of a current LFC Element Setting of the terminal device is changed after the LFC server succeeds in activating the LFC Element Setting of the terminal device. In other words, the indication of a current LFC Element Setting still indicates the original LFC Element Setting if the LFC server fails to activate the LFC Element Setting. Therefore, the situation where the LFC Element Setting actually used by the terminal device is different from a current LFC Element Setting indicated by the terminal device is avoided.

In addition, the LFC server may deactivate an LFC Element Setting of the terminal device, and the LFC server can therefore prevent the terminal device from using the expired LFC Element Settting in the case that the usage term of an LFC Element Setting customized by the user for the terminal device expires. Thereby, the LFC server is enabled to manage an LFC Element Setting of the terminal device effectively.

Second, after the LFC server changes an LFC Element, the terminal device can change other LFC Elements related to the LFC Element. Therefore, the complexity of processing by the LFC server is reduced effectively and the amount of the information to be transferred in the air is reduced.

Third, the LFC server can lock an LFC Element Setting of the terminal device. As a result, the user can not change a particular LFC Element Setting, which improves the further extension of the customization service of the user.

Fourth, the LFC server can query a default value of an LFC Element of the terminal device. Therefore, upon deactivating an LFC Element Setting, the LFC server can recover the LFC Element Setting to the default value so as to make the user use the terminal device normally, thereby improving the service experience of the user. The LFC server can also set the default value of the LFC Element of the terminal device, increasing functions of customizing the look and feel of the terminal device and satisfying the demand of the user for changing the default value of the LFC Element.

Fifth, the LFC server can change the parameter of the LFC Element Setting of the terminal device according to the demand of the user for customizing an LFC Element Setting. Therefore, richer experience is provided to the user and the development of look and feel customization of the terminal device is improved.

To sum up, with the technical solutions in accordance with the embodiments of the present invention, the look and feel of the terminal device can be managed overall, and thus the customization experience of the user is improved and the development of the customization service is improved.

The above are only preferred embodiments of the present invention and are not for use in limiting the protection scope of the invention. All the modifications, equivalent replacements and improvements according to the principles of the present invention shall be included in the protection scope of the present invention.

## Claims

1. A method for managing look and feel of a terminal device, **characterized by** the steps of:
- receiving (45, 53, 65, 73) a configuration command from a server through a standard interface for managing the look and feel of the terminal device, the configuration command using a Look and Feel Customization, LFC, Element type node to distinguish different types of LFC Elements, the configuration command containing at least one of: a designated LFC Element Setting, a designated default LFC Element Setting and a designated parameter of an LFC Element Setting, wherein a Related parameter node is set under the LFC Element Type node defining a second LFC Element Setting, and a parameter and the parameter value related to the second LFC Element Setting are set under the Related parameter node;
- managing (46, 47, 54, 55, 66, 74) the look and feel of the terminal device by managing the Element type node according to the configuration command; and
- setting (47, 55) the second LFC Element Setting related to the designated LFC Element according to the parameter and the parameter value related to the designated LFC Element Setting under the Related parameter node.

2. The method of Claim 1, wherein the managing the look and feel of the terminal device comprises:
activating or deactivating the designated LFC Element Setting according to the configuration command containing the designated LFC Element Setting.

3. The method of Claim 2, wherein the activating the designated LFC Element Setting comprises:
changing a current LFC Element Setting to the designated LFC Element Setting; or
setting the state of the designated LFC Element Setting as a current state.

4. The method of Claim 2, wherein the deactivating the designated LFC Element Setting comprises:
changing a current LFC Element Setting to a default LFC Element Setting; or,
setting the state of the designated LFC Element Setting as a non current state, and setting the state of the default LFC Element Setting as a current state.

5. The method of Claim 1, wherein the managing the look and feel of the terminal device comprises:
locking (54) or unlocking the designated LFC Element Setting according to the configuration command containing the designated LFC Element Setting.

6. The method of Claim 5, wherein the locking the designated LFC Element Setting comprises: setting the state of the designated LFC Element Setting as locked; or
the unlocking the designated LFC Element Setting comprises: setting the state of the designated LFC Element Setting as unlocked.

7. The method of Claim 5 or 6, wherein the designated LFC Element Setting can not be changed or updated after the designated LFC Element Setting is locked.

8. The method of Claim 1, wherein the managing the look and feel of the terminal device comprises:
setting a default LFC Element Setting as the designated default LFC Element Setting according to the configuration command containing the designated default LFC Element Setting.

9. The method of Claim 8, wherein the setting the default LFC Element Setting comprises:
changing a current default LFC Element Setting to the designated default LFC Element Setting; or,
setting the state of the current default LFC Element Setting as a non default state and setting the state of the designated default LFC Element Setting as a default state.

10. The method of Claim 1, wherein the managing the look and feel of the terminal device comprises:
changing a current parameter of the LFC Element Setting to the designated parameter according to the configuration command containing the designated parameter of the LFC Element Setting.

11. A device for managing look and feel of a terminal device, **characterized by** comprising:
a transfer module (82), configured to communicate with a server and receive a configuration command from the server via a standard interface for managing the look and feel of the terminal device using a Look and Feel Customization, LFC, Element type node to distinguish different types of LFC Elements, wherein the configuration command contains at least one of: a designated LFC Element Setting, a designated default LFC Element Setting and a designated parameter of an LFC Element Setting, wherein a Related parameter node is set under the LFC Element Type node defining a second LFC Element Setting, and a parameter and the parameter value related to the second LFC Element Setting are set under the Related parameter node; and
a look and feel management module (81), configured to manage look and feel of a terminal device by managing the at least one node according to the configuration command; wherein the look and feel management module (81) comprises a related module (814), configured to store a related relation between LFC Elements and change a second LFC Element Setting related to the designated LFC Element Setting contained in the configuration command according to the parameter and the parameter value related to the designated LFC Element Setting under the Related parameter node.

12. The device of Claim 11, wherein the look and feel management module (81) comprises:
an activation module (811), configured to activate the designated LFC Element Setting contained in the configuration command; and/or
a deactivation module (812), configured to deactivate the designated LFC Element Setting contained in the configuration command.

13. The device of Claim 11 or 12, wherein the look and feel management module (81) comprises: a locking module (813), configured to lock or unlock the designated LFC Element Setting contained in the configuration command.

14. The device of Claim 11, 12 or 13, wherein the look and feel management module (81) comprises:
a default value module (815), configured to change a default LFC Element Setting to the designated default Element Setting contained in the configuration command.

15. The device of Claim 11, 12, 13 or 14, wherein the look and feel management module (81) comprises:
a parameter configuration module (816), configured to store configuration of a parameter of the LFC Element Setting and change the parameter of the LFC Element Setting to the designated parameter contained in the configuration command.

## Patentansprüche

1. Verfahren zum Verwalten von Look und Feel eines Endgeräts, **gekennzeichnet durch** die folgenden Schritte:
- Empfangen (45, 53, 65, 73) eines Konfigurationsbefehls von einem Server **durch** eine Standardschnittstelle zum Verwalten des Look und Feel des Endgeräts, wobei der Konfigurationsbefehl einen Element-Typ-Knoten der Anpassung von Look und Feel LFC verwendet, um verschiedene Typen von LFC-Elementen zu unterscheiden, wobei der Konfigurationsbefehl mindestens eine der folgenden Alternativen enthält: eine designierte LFC-Element-Einstellung, eine designierte Vorgabe-LFC-Element-Einstellung und einen designierten Parameter einer LFC-Element-Einstellung, wobei ein Verwandter-Parameter-Knoten unter dem LFC-Element-Typ-Knoten gesetzt wird, wodurch eine zweite LFC-Element-Einstellung definiert wird, und ein Parameter und der Parameterwert in Bezug auf die zweite LFC-Element-Einstellung unter dem Verwandter-Parameter-Knoten gesetzt werden;
- Verwalten (46, 47, 54, 55, 66, 74) des Look und Feel des Endgeräts **durch** Verwalten des Element-Typ-Knotens gemäß dem Konfigurationsbefehl; und
- Setzen (47, 55) der zweiten LFC-Element-Einstellung in Bezug auf das designierte LFC-Element gemäß dem Parameter und dem Parameterwert in Bezug auf die designierte LFC-Element-Einstellung unter dem Verwandter-Parameter-Knoten.

2. Verfahren nach Anspruch 1, wobei das Verwalten des Look und Feel des Endgeräts Folgendes umfasst:
Aktivieren oder Deaktivieren der designierten LFC-Element-Einstellung gemäß dem Konfigurationsbefehl, der die designierte LFC-Element-Einstellung enthält.

3. Verfahren nach Anspruch 2, wobei das Aktivieren der designierten LFC-Element-Einstellung Folgendes umfasst:
Umändern einer aktuellen LFC-Element-Einstellung in die designierte LFC-Element-Einstellung; oder
Setzen des Zustands der designierten LFC-Element-Einstellung als einen aktuellen Zustand.

4. Verfahren nach Anspruch 2, wobei das Deaktivieren der designierten LFC-Element-Einstellung Folgendes umfasst:
Umändern einer aktuellen LFC-Element-Einstellung in eine Vorgabe-LFC-Element-Einstellung; oder
Setzen des Zustands der designierten LFC-Element-Einstellung als einen nicht aktuellen Zustand und Setzen des Zustands der Vorgabe-LFC-Element-Einstellung als einen aktuellen Zustand.

5. Verfahren nach Anspruch 1, wobei das Verwalten des Look und Feel des Endgeräts Folgendes umfasst:
Verriegeln (54) oder Entriegeln der designierten LFC-Element-Einstellung gemäß dem Konfigurationsbefehl, der die designierte LFC-Element-Einstellung enthält.

6. Verfahren nach Anspruch 5, wobei das Verriegeln der designierten LFC-Element-Einstellung Folgendes umfasst: Setzen des Zustands der designierten LFC-Element-Einstellung als verriegelt; oder
das Entriegeln der designierten LFC-Element-Einstellung Folgendes umfasst: Setzen des Zustands der designierten LFC-Element-Einstellung als entriegelt.

7. Verfahren nach Anspruch 5 oder 6, wobei die designierte LFC-Element-Einstellung nicht verändert oder aktualisiert werden kann, nachdem die designierte LFC-Element-Einstellung verriegelt ist.

8. Verfahren nach Anspruch 1, wobei das Verwalten des Look und Feel des Endgeräts Folgendes umfasst:
Setzen einer Vorgabe-LFC-Element-Einstellung als die designierte Vorgabe-LFC-Element-Einstellung gemäß dem Konfigurationsbefehl, der die designierte Vorgabe-LFC-Element-Einstellung enthält.

9. Verfahren nach Anspruch 8, wobei das Setzen der Vorgabe-LFC-Element-Einstellung Folgendes umfasst:
Umändern einer aktuellen Vorgabe-LFC-Element-Einstellung in die designierte Vorgabe-LFC-Element-Einstellung oder
Setzen des Zustands der aktuellen Vorgabe-LFC-Element-Einstellung als einen Nicht-Vorgabe-Zustand und Setzen des Zustands der designierten Vorgabe-LFC-Element-Einstellung als einen Vorgabezustand.

10. Verfahren nach Anspruch 1, wobei das Verwalten des Look und Feel des Endgeräts Folgendes umfasst:
Umändern eines aktuellen Parameters in der LFC-Element-Einstellung in den designierten Parameter gemäß dem Konfigurationsbefehl, der den designierten Parameter der LFC-Element-Einstellung enthält.

11. Einrichtung zum Verwalten von Look und Feel eines Endgeräts, **dadurch gekennzeichnet, dass** sie Folgendes umfasst:
ein Transfermodul (82), das dafür ausgelegt ist, mit einem Server zu kommunizieren und über eine Standardschnittstelle zum Verwalten des Look und Feel des Endgeräts einen Konfigurationsbefehl von dem Server zu empfangen, der einen Element-Typ-Knoten der Anpassung von Look und Feel LFC verwendet, um verschiedene Typen von LFC-Elementen zu unterscheiden, wobei der Konfigurationsbefehl mindestens eine der folgenden Alternativen enthält: eine designierte LFC-Element-Einstellung, eine designierte Vorgabe-LFC-Element-Einstellung und einen designierten Parameter einer LFC-Element-Einstellung, wobei ein Verwandter-Parameter-Knoten unter dem LFC-Element-Typ-Knoten gesetzt wird, wodurch eine zweite LFC-Element-Einstellung definiert wird, und ein Parameter und der Parameterwert in Bezug auf die zweite LFC-Element-Einstellung unter dem Verwandter-Parameter-Knoten gesetzt werden; und
ein Look-und-Feel-Verwaltungsmodul (81), das dafür ausgelegt ist, Look und Feel eines Endgeräts durch Verwalten des mindestens einen Knotens gemäß dem Konfigurationsbefehl zu verwalten; wobei das Look-und-Feel-Verwaltungsmodul (81) ein verwandtes Modul (814) umfasst, das dafür ausgelegt ist, eine verwandte Beziehung zwischen LFC-Elementen zu speichern und eine zweite LFC-Element-Einstellung in Bezug auf die designierte LFC-Element-Einstellung, die in dem Konfigurationsbefehl enthalten ist, gemäß dem Parameter und dem Parameterwert in Bezug auf die designierte LFC-Element-Einstellung unter dem Verwandter-Parameter-Knoten zu ändern.

12. Einrichtung nach Anspruch 11, wobei das Look-und-Feel-Verwaltungsmodul (81) Folgendes umfasst:
ein Aktivierungsmodul (811), das dafür ausgelegt ist, die in dem Konfigurationsbefehl enthaltene designierte LFC-Element-Einstellung zu aktivieren; und/oder
ein Deaktivierungsmodul (812), das dafür ausgelegt ist, die in dem Konfigurationsbefehl enthaltene designierte LFC-Element-Einstellung zu deaktivieren.

13. Einrichtung nach Anspruch 11 oder 12, wobei das Look-und-Feel-Verwaltungsmodul (81) Folgendes umfasst: ein Verriegelungsmodul (813), das dafür ausgelegt ist, die in dem Konfigurationsbefehl enthaltene designierte LFC-Element-Einstellung zu verriegeln oder entriegeln.

14. Einrichtung nach Anspruch 11, 12 oder 13, wobei das Look-und-Feel-Verwaltungsmodul (81) Folgendes umfasst:
ein Vorgabewertmodul (815), das dafür ausgelegt ist, eine Vorgabe-LFC-Element-Einstellung in die in dem Konfigurationsbefehl enthaltene designierte VorgabeElement-Einstellung umzuändern.

15. Einrichtung nach Anspruch 11, 12, 13 oder 14, wobei das Look-und-Feel-Verwaltungsmodul (81) Folgendes umfasst:
ein Parameterkonfigurationsmodul (816), das dafür ausgelegt ist, die Konfiguration eines Parameters der LFC-Element-Einstellung zu speichern und den Parameter der LFC-Element-Einstellung in den in dem Konfigurationsbefehl enthaltenen designierten Parameter umzuändern.

## Revendications

1. Procédé de gestion de l'aspect et de la convivialité d'un dispositif terminal, **caractérisé par** les étapes suivantes :
- réception (45, 53, 65, 73) d'une commande de configuration depuis un serveur par le biais d'une interface standard afin de gérer l'aspect et la convivialité du dispositif terminal, la commande de configuration utilisant un noeud de type Elément de Personnalisation d'Aspect et de Convivialité, LFC, pour différencier différents types d'Eléments LFC, la commande de configuration contenant au moins l'un d'un : Réglage d'Elément LFC désigné, d'un Réglage d'Elément LFC par défaut désigné et d'un paramètre désigné d'un Réglage d'Elément LFC, dans lequel un noeud de paramètre connexe est établi sous le noeud de Type d'Elément LFC définissant un second Réglage d'Elément LFC, et un paramètre et la valeur de paramètre relatifs au second Réglage d'Elément LFC sont établis sous le noeud de paramètre connexe ;
- gestion (46, 47, 54, 55, 66, 74) de l'aspect et de la convivialité du dispositif terminal en gérant le noeud de type d'Elément conformément à la commande de configuration ; et
- établissement (47, 55) du second Réglage d'Elément LFC lié à l'Elément LFC désigné conformément au paramètre et à la valeur de paramètre relatifs au Réglage d'Elément LFC désigné sous le noeud de paramètre connexe.

2. Procédé selon la revendication 1, dans lequel la gestion de l'aspect et de la convivialité du dispositif terminal comprend :
l'activation ou la désactivation du Réglage d'Elément LFC désigné conformément à la commande de configuration contenant le Réglage d'Elément LFC désigné.

3. Procédé selon la revendication 2, dans lequel l'activation du Réglage d'Elément LFC désigné comprend :
le changement d'un Réglage d'Elément LFC courant en le Réglage d'Elément LFC désigné ; ou
l'établissement de l'état du Réglage d'Elément LFC désigné comme un état courant.

4. Procédé selon la revendication 2, dans lequel la désactivation du Réglage d'Elément LFC désigné comprend :
le changement d'un Réglage d'Elément LFC courant en un Réglage d'Elément LFC par défaut ; ou,
l'établissement de l'état du Réglage d'Elément LFC désigné comme un état non courant, et l'établissement du Réglage d'Elément LFC par défaut comme un état courant.

5. Procédé selon la revendication 1, dans lequel la gestion de l'aspect et de la convivialité du dispositif terminal comprend :
le verrouillage (54) ou le déverrouillage du Réglage d'Elément LFC désigné conformément à la commande de configuration contenant le Réglage d'Elément LFC désigné.

6. Procédé selon la revendication 5, dans lequel le verrouillage du Réglage d'Elément LFC désigné comprend : l'établissement de l'état du Réglage d'Elément LFC désigné comme étant verrouillé ; ou
le déverrouillage du Réglage d'Elément LFC désigné comprend : l'établissement de l'état du Réglage d'Elément LFC désigné comme étant déverrouillé.

7. Procédé selon la revendication 5 ou 6, dans lequel le Réglage d'Elément LFC désigné ne peut pas être changé ou actualisé après le verrouillage du Réglage d'Elément LFC désigné.

8. Procédé selon la revendication 1, dans lequel la gestion de l'aspect et de la convivialité du dispositif terminal comprend :
l'établissement d'un Réglage d'Elément LFC par défaut comme Réglage d'Elément LFC par défaut désigné conformément à la commande de configuration contenant le Réglage d'Elément LFC par défaut désigné.

9. Procédé selon la revendication 8, dans lequel l'établissement du Réglage d'Elément LFC par défaut comprend :
le changement d'un Réglage d'Elément LFC par défaut courant en le Réglage d'Elément LFC par défaut désigné ; ou,
l'établissement de l'état du Réglage d'Elément LFC par défaut courant comme un état non par défaut et l'établissement de l'état du Réglage d'Elément LFC par défaut désigné comme un état par défaut.

10. Procédé selon la revendication 1, dans lequel la gestion de l'aspect et de la convivialité du dispositif terminal comprend :
le changement d'un paramètre courant du Réglage d'Elément LFC en le paramètre désigné conformément à la commande de configuration contenant le paramètre désigné du Réglage d'Elément LFC.

11. Dispositif de gestion de l'aspect et de la convivialité d'un dispositif terminal, **caractérisé en ce qu'**il comprend :
- un module de transfert (82), configuré pour communiquer avec un serveur et recevoir une commande de configuration depuis le serveur par le biais d'une interface standard afin de gérer l'aspect et la convivialité du dispositif terminal en utilisant un noeud de type Elément de Personnalisation d'Aspect et de Convivialité, LFC, pour différencier différents types d'Eléments LFC, la commande de configuration contenant au moins l'un d'un : Réglage d'Elément LFC désigné, d'un Réglage d'Elément LFC par défaut désigné et d'un paramètre désigné d'un Réglage d'Elément LFC, dans lequel un noeud de paramètre connexe est établi sous le noeud de Type d'Elément LFC définissant un second Réglage d'Elément LFC, et un paramètre et la valeur de paramètre relatifs au second Réglage d'Elément LFC sont établis sous le noeud de paramètre connexe ; et
- un module de gestion d'aspect et de convivialité (81), configuré pour gérer l'aspect et la convivialité d'un dispositif terminal en gérant l'au moins un noeud conformément à la commande de configuration ; le module de gestion d'aspect et de convivialité (81) comprenant un module connexe (814), configuré pour mémoriser une relation connexe entre des Éléments LFC et changer un second Réglage d'Elément LFC lié au Réglage d'Elément LFC désigné contenu dans la commande de configuration conformément au paramètre et à la valeur de paramètre relatifs au Réglage d'Elément LFC désigné sous le noeud de paramètre connexe.

12. Dispositif selon la revendication 11, dans lequel le module de gestion d'aspect et de convivialité (81) comprend :
un module d'activation (811), configuré pour activer le Réglage d'Elément LFC désigné contenu dans la commande de configuration ; et/ou
un module de désactivation (812), configuré pour désactiver le Réglage d'Elément LFC désigné contenu dans la commande de configuration.

13. Dispositif selon la revendication 11 ou 12, dans lequel le module de gestion d'aspect et de convivialité (81) comprend : un module de verrouillage (813), configuré pour verrouiller ou déverrouiller le Réglage d'Elément LFC désigné contenu dans la commande de configuration.

14. Dispositif selon la revendication 11, 12 ou 13, dans lequel le module de gestion d'aspect et de convivialité (81) comprend :
un module de valeur par défaut (815), configuré pour changer un Réglage d'Elément LFC par défaut en le Réglage d'Elément par défaut désigné contenu dans la commande de configuration.

15. Dispositif selon la revendication 11, 12, 13 ou 14, dans lequel le module de gestion d'aspect et de convivialité (81) comprend :
un module de configuration de paramètre (816), configuré pour mémoriser la configuration d'un paramètre du Réglage d'Elément LFC et changer le paramètre du Réglage d'Elément LFC en le paramètre désigné contenu dans la commande de configuration.
